# EUROPÄISCHE PATENTSCHRIFT

(11) **EP 4 483 716 B1**
(45) Veröffentlichungstag und Bekanntmachung des Hinweises auf die Patenterteilung: **10.06.2026**
(21) Anmeldenummer: 24184614.6
(22) Anmeldetag: 26.06.2024
(51) Int. Cl.: A01N 63/38, A01N 25/04, A01N 25/34, A01N 35/08, A01N 43/80, A01N 43/40, A01P 3/00, B27K 3/15, B27K 3/50, C09D 5/14, C09D 15/00

(54) **BIOLOGISCHER HOLZSCHUTZ**
BIOLOGICAL WOOD PROTECTION
PROTECTION BIOLOGIQUE DU BOIS

(30) Priorität: 26.06.2023 EP 23181504
(43) Veröffentlichungstag der Anmeldung: 01.01.2025
(73) Patentinhaber: Adler-Werk Lackfabrik Johann Berghofer GmbH & Co KG, 6130 Schwaz (AT)
(72) Erfinder: RÖSSLER, Albert, 6020 Innsbruck (AT); ENDERS, Michael, 6130 Schwaz (AT); GRÜLL, Gerhard, 2362 Biedermannsdorf (AT); PFABIGAN, Notburga, 1220 Wien (AT)
(74) Vertreter: Lorenz Seidler Gossel Part. mbB

(56) Entgegenhaltungen:
- EP-A2- 3 262 938
- WO-A1-2021/060978
- WO-A1-93/01923
- WO-A1-93/08694
- CN-A- 114 540 201
- US-A1- 2002 096 273
- "Natural bio-based products for wood coating and protection against degradation: A Review", BIORESOURCES, vol. 14, no. 2, 1 January 2019 (2019-01-01), US, pages 4873 - 4901, XP055833819, ISSN: 1930-2126, DOI: 10.15376/biores.14.2.Teaca
- BROWN HEATHER L ET AL: "Assessment of the biocontrol potential of a Trichoderma viride isolate Part I: Establishment of field and fungal cellar trials", INTERNATIONAL BIODETERIORATION & BIODEGRADATION, 10 March 2000 (2000-03-10), pages 219 - 223, XP093090528, Retrieved from the Internet <URL:https://www.sciencedirect.com/science/article/pii/S0964830599000827/pdfft?md5=f61374391b52b6a2c83f1b8fda2197b9&pid=1-s2.0-S0964830599000827-main.pdf> [retrieved on 20231011]
- MULLER A. ET AL: "Survey on alternatives for in-can preservatives for varnishes, paints and adhesives", BAUA REPORT, 1 January 2020 (2020-01-01), pages 1 - 57, XP055979224, DOI: 10.21934/baua:report20200811
- PETRI SUSI ET AL: "Biological control of wood decay against fungal infection", JOURNAL OF ENVIRONMENTAL MANAGEMENT, ELSEVIER, AMSTERDAM, NL, vol. 92, no. 7, 6 March 2011 (2011-03-06), pages 1681 - 1689, XP028384178, ISSN: 0301-4797, [retrieved on 20110311], DOI: 10.1016/J.JENVMAN.2011.03.004

## Beschreibung

Die Erfindung betrifft ein Verfahren zur Herstellung eines beschichteten Holzbauteils, das einen biologischen Schutz gegen Befall durch holzzerstörende Pilze aufweist. Die Erfindung betrifft weiterhin ein anhand des Verfahrens hergestelltes Holzbauteil sowie dessen Verwendung als Baustoff im Gebäudebau, insbesondere im Außenbereich.

Holz wird als Baustoff sowohl im Innen- als auch im Außenbereich verwendet. Da es sich bei diesem Werkstoff um ein Naturprodukt handelt, kann es durch Umwelteinflüsse wie Licht, Wasser und Organismen in der Bewitterung zerstört werden. Vor allem bei einer länger einwirkenden Holzfeuchte über 20 % kann es zum Befall durch holzzerstörende Pilze kommen. Wenn es zur Zerstörung des Holzes kommt, wird nicht nur die Optik, sondern vielmehr auch die Statik negativ beeinflusst. Grundsätzlich gilt es daher Holz vor dauerhafter Feuchtebelastung durch bauliche Maßnahmen (konstruktiver Holzschutz) zu schützen. Zudem gibt es den physikalischen Schutz durch Beschichtungen, welche die Fähigkeit aufweisen, die Feuchteaufnahme zu reduzieren. Ein konstruktiver Holzschutz ist aber nicht für alle Bauteile, beispielsweise an einem Haus, möglich. Balkone, Schalungen, Fenster, Türen oder Zäune sind ständig der Witterung und somit der Feuchte ausgesetzt. Auch der physikalische Schutz durch Beschichtungen ist bisher begrenzt. An derartigen Gebäudeteilen tritt somit gehäuft die Ansiedlung von Algen und Mikroorganismen (Bakterien und Pilze) auf.

Es ist vor diesem Hintergrund bekannt und üblich, einen Schutz vor Mikroorganismen durch Beschichtungssysteme (Imprägnierung, Schutzlacke, etc.) mit Bioziden zu gewährleisten. Die bisher eingesetzten Technologien beruhen auf klassischen Wirkstoffen, v.a. Propiconazol, Borate und 3-lodpropargyl-N-butylcarbamat, kurz IPBC. Chemischer Holzschutz ist aber normalerweise temporär und nicht dauerhaft, da die eingesetzten Biozide aufgrund ihres geringen Molekulargewichts aus der Beschichtung diffundieren oder auch ausgewaschen werden. Insofern werden die rein organisch-chemischen Wirkstoffe oftmals auch abgebaut. Damit wird die Wirksamkeit gesenkt und die eingesetzten Wirkstoffe gelangen in die Umwelt. Da es sich bei den Bioziden zumeist um ökotoxikologisch bedenkliche Stoffe handelt und deren Eintrag in die Umwelt weitestgehend vermieden werden soll, bestehen oftmals gesetzliche Regelungen. Deren Einsatz wird zunehmend strenger reglementiert und viele eingesetzt Produkte wurden bereits verboten. Dadurch ist ein großer Handlungsbedarf für alternative Lösungen gegeben.

Ein Verzicht auf klassische Biozide kann grundsätzlich durch einen biologisch wirkenden Holzschutz erfolgen. Ein solcher "biologischer Holzschutz" durch Einsatz von Mikroorganismen (v.a. antagonistisch wirkenden Pilzen oder Bakterien) und Enzymen ist als Paralleltechnologie zu den bisher bekannten Holzschutzmöglichkeiten anzusehen, die erstens konstruktiven Holzschutz durch bauliche Maßnahmen, zweitens physikalischen Holzschutz, z.B. vor Strahlung und Feuchte durch Beschichtung bzw. Lackierung, und drittens chemischen Holzschutz mittels Bioziden umfassen. Der biologische Holzschutz umfasst vor allem den Einsatz von lebenden Organismen (antagonistisch wirkende Mikroorgansimen) oder Enzymen, umfasst aber auch den Einsatz anderer Wirkstoffe biogenen Ursprungs. Derartige Wirkstoffe sind natürlicher Herkunft und stehen im Gegensatz zu synthetisch hergestellten, klassischen Bioziden. Die Wirkstoffe können auch in Kombination mit sog. Boostern eingesetzt werden, also Stoffen zur Senkung der nötigen eingesetzten Konzentration an Wirkstoff.

Unter anderem haben lebende Organismen der Gattungen Trichoderma, Gliocladium, Bacillus, Pseudomonas oder Streptomyces Potential für den Einsatz im Holzschutz. Ihre Wirkung ist im Pflanzenschutz bekannt. Ihre Wirkmechanismen beruhen einerseits darauf, dass sie mit holzzerstörenden oder holzverfärbenden Organismen um verfügbare Nährstoffe konkurrieren, und andererseits darauf, dass sie diverse biochemische, gegen Schadorganismen effektive Substanzen produzieren und ausscheiden. Dabei interagieren Antagonisten jeweils mit bestimmten Zielorganismen.

Von großem Interesse sind Mikroorganismen (Pilze und/oder Bakterien) die ein breites Aktivitätsspektrum gegen holzzerstörende und/oder -verfärbende Pilze aufweisen. Neben dem direkten Einsatz der lebenden Organismen können diese Mikroorganismen auch dazu dienen, Verbindungen herzustellen, die dann wie synthetisch hergestellte Biozide im Holzschutz eingesetzt werden.

In der AT 397 811 B und der DE 3 600 394 A1 werden bestimmte Pilze der Gattung Trichoderma und deren Anwendung im biologischen Holzschutz vorgestellt. Nachteilig an den dort vorgestellten Verfahren ist, dass die Pilze auf dem behandelten Gegenstand nach der Behandlung für Tage bis Wochen bebrütet werden müssen (AT 397 811 B), oder der Pilz nur bekämpfend, aber nicht vorbeugend eingesetzt wird und dieser nach erfolgter Vernichtung des Schadpilzes abstirbt (DE 3 600 394 A1). Zudem kann es zu Verfärbungen der Oberfläche durch die verwendeten Mikroorganismen kommen.

Die Review-Artikel Teacä et al. (2019), BioResources 14(2), 4873-4901 und P. Susi et al. (2011), J. Environmental Management 92, 1681-1689 geben einen Überblick über die bisherige Verwendung von Pilzsporen, unter anderem auch von Pilzen aus der Gattung Trichoderma, im biologischen Holzschutz.

Die WO 93/08694 A1 offenbart die Verwendung bestimmter Trichoderma-Stämme in Sporensuspensionen, die als Holz- und Pflanzenschutzmittel zum Einsatz kommen sollen. Beschrieben werden Sprüh- und Tauchapplikationen sowie eine vorbeugende Behandlung von Hölzern.

Der Artikel H.L. Brown, A. Bruce (1999), Int. Biodeterioration & Biodegradation 44, 219-233 offenbart eine Holzbehandlung mit Trichoderma-Sporen, die unter bestimmten Voraussetzungen als Alternative zu chemischen Schutzmaßnahmen dienen soll.

Die EP 3 262 938 A2 betrifft die nachträgliche Behandlung von befallenem Holz durch die Einbringung eines antagonistischen Pilzes durch eine Bohrung.

Die US 2002/096273 A1 beschreibt die Verwendung Ophiosomata-Pilzsporen in Sporensuspensionen, die als Holzschutzmittel gegen Pilzbefall zum Einsatz kommen sollen. Die WO 93/01923 A1 beschreibt die Verwendung Gliocladium-Pilzsporen in Sporensuspensionen, die als Holzschutzmittel gegen Pilzbefall zum Einsatz kommen sollen. Die CN 114 540 201 A betrifft den Einsatz eines speziellen, neuen Trichoderma-Stamms (virens NY45 CGMCC No. 40004) zur Behandlung von Holz gegen Befall.

Die WO 2021/060978 A1 offenbart eine Holzschutzbeschichtung mit darin enthaltenen Pilzsporen, die oberflächenaktive Substanzen aussondern, um der Beschichtung gute physikalische Eigenschaften zu verleihen und deren Haftung an der Substratoberfläche zu verbessern.

Aufgabe der Erfindung ist, ein praxistaugliches Verfahren zur Herstellung eines als Baustoff verwendbaren Holzbauteils bereitzustellen, das einen physikalischen Schutz vor Feuchtigkeit und Strahlung durch eine Beschichtung und einen biologischen Schutz gegen Befall durch holzzerstörende und / oder holzverfärbende Pilze aufweist.

Vor diesem Hintergrund schlägt die Erfindung ein Verfahren zur Herstellung eines an wenigstens einer Oberfläche beschichteten Holzbauteils vor, das einen biologischen Schutz gegen Befall durch holzzerstörende und / oder holzverfärbende Pilze aufweist, wie im anhängenden Anspruch 1 definiert.

Das Verfahren umfasst die Imprägnierung des Holzbauteils durch Auftragung eines Imprägnierungsmittels auf die Oberfläche, sowie die nachgelagerte Auftragung eines vom Imprägnierungsmittel verschiedenen weiteren Beschichtungsmittels auf die imprägnierte Oberfläche zum Erhalt einer Deckschicht. Bevorzugt kann die Auftragung wenigstens zweier weiterer Schichten in Form einer Zwischenschicht und in der Folge der Deckschicht sein, wobei sich das Beschichtungsmittel zur Auftragung der Zwischenschicht sowohl vom Beschichtungsmittel zur Auftragung der Deckschicht als auch vom Imprägnierungsmittel unterscheidet.

Erfindungsgemäß ist vorgesehen, dass das Imprägnierungsmittel mit einer Vorkultur von und/oder mit Sporen eines gegenüber holzzerstörenden und/oder holzverfärbenden Mikroorganismen antagonistisch wirkenden Pilzes versetzt ist, oder dass zumindest die zu beschichtende Oberfläche des Holzbauteils vor der Auftragung des Imprägnierungsmittels in ein Flüssigmedium getaucht wird, welches mit einer Vorkultur und/oder mit Sporen eines antagonistischen Pilzes versetzt ist.

Bei dem antagonistischen Pilz handelt es sich um einen Pilz der Gattung Trichoderma. Bevorzugte Beispiele umfassen einen Pilz der Gattung Trichoderma mit der wissenschaftlichen Bezeichnung Trichoderma harzianum, welcher am 17. April 2024 von der Holzforschung Austria - Österreichische Gesellschaft für Holzforschung, Franz-Grill-Str. 7, 1030 Wien, Österreich und der ADLER-Werk Lackfabrik Johann Berghofer GmbH & Co. KG, Bergwerkstr. 22, 6130 Schwaz, Österreich beim Leibniz-Institut DSMZ-Deutsche Sammlung von Mikroorganismen und Zellkulturen GmbH hinterlegt wurde (Bezugszeichen der Hinterleger: HFA 335) und die Eingangsnummer DSM 34998 erhalten hat, und Pilz der Gattung Trichoderma mit der wissenschaftlichen Bezeichnung Trichoderma virens, welcher am 17. April 2024 von der Holzforschung Austria - Österreichische Gesellschaft für Holzforschung, Franz-Grill-Str. 7, 1030 Wien, Österreich und der ADLER-Werk Lackfabrik Johann Berghofer GmbH & Co. KG, Bergwerkstr. 22, 6130 Schwaz, Österreich beim Leibniz-Institut DSMZ- Deutsche Sammlung von Mikroorganismen und Zellkulturen GmbH hinterlegt wurde (Bezugszeichen der Hinterleger: HFA 347) und die Eingangsnummer DSM 35005 erhalten hat.

Beide diese Pilze können in Malzextrakt Agar (MEA; 12,75 g/l Malzextrakt; 10,78 g/l Pepton; 2,35 g/l Glycerin; 2,75 g/l Dextrin; 5 g/l Agar) als Nährmedium vermehrt werden (pH 4,7). Die Inkubationszeit beträgt 5 Tage für HFA 335 und 7 Tage für HFA 347 bei 22°C.

Auch eine Kombination dieser Pilze kann in einer Ausführungsform der Erfindung zur Anwendung kommen.

Experimentell konnte gezeigt werden, dass Tr. harzianum (HFA 335) gegenüber holzzerstörenden Pilzen eine besonders gute Wirksamkeit besitzt, und dass Tr. virens (HFA 347) gegenüber holzverfärbenden Pilzen eine besonders gute Wirksamkeit besitzt.

Das mit der Vorkultur und/oder den Sporen versetzte Imprägnierungsmittel kann hergestellt werden, indem einem bestehenden Imprägnierungsmittel ein Flüssigmedium zugegeben wird, welches mit der Vorkultur und/oder den Sporen versetzt ist. Beispielsweise kann es sich um eine Sporensuspension handeln.

Das Imprägnierungsmittel kann Bindemittel (z.B. Alkyd-, Polyurethan-, oder Acrylharz) und Hilfsmittel enthalten. Dazu gehören beispielsweise Netz- und Dispergiermittel wie z.B. Alkalimetall- und Ammoniumpolyphosphate oder Alkalimetall- und Ammoniumsalze der Polyacrylsäuren und Polymaleinsäuren. Weiterhin umfassen die Hilfsmittel auch z.B. Colösemittel (wie z.B. Glykolether), Entschäumer, Lichtschutzmittel, Hydrophobiermittel, Verdicker (wie Cellulosederivate, Natriumpolyacrylate, oder assoziativ wirkende Styrol-Maleinsäureanhydrid-Polymerisate bzw. hydrophob modifizierte Polyurethan, oder anorganische System auf Basis Hectorit oder Bentonit), oder auch Fasern.

Gemäß der Erfindung enthält das Imprägnierungsmittel klassische chemische Topfkonservierungsmittel, nämlich eine oder mehrere Substanzen ausgewählt aus Isothiazolinonen, z.B. 1,2-Benzisothiazol-3(2H)-one (BIT, CAS-Nr. 2634-33-5), 2-Methyl-2H-isothiazol-3-one (MIT, CAS-Nr. 2682-20-4), 2-Octyl-2H-isothiazol-3-one (OIT, CAS-Nr. 26530-20-1), 5-Chloro-2-methyl-2H-isothiazol-3-one (CIT, CAS-Nr. 26172-55-4), Bronopol (CAS-Nr.52-51-7) oder Pyrithion, z.B. Natriumpyrithion (CAS-Nr. 3811-73-2). Bevorzugte Konzentrationsbereiche für die Topfkonservierungsmittel liegen zwischen 0,1ppm - 200ppm. Es konnte experimentell belegt werden, dass eine derartige Topfkonservierung des Imprägnierungsmittels die Vorkultur oder Sporen nicht oder zumindest nicht entscheidend negativ beeinträchtigt. Die Möglichkeit der Anwendung einer Topfkonservierung ist für die Umsetzung eines Produkts mit für den freien Verkauf notwendigen Haltbarkeiten wichtig.

Die Auftragung des Imprägnierungsmittels kann mit allen gängigen Applikationstechniken erfolgen. Beispiele umfassen Aufspritzen, Aufwalzen, Aufstreichen, Tauchen, Fluten und Druckimprägnierung. Dasselbe gilt für mögliche Zwischen- und Deckschichten.

Die Eintauchzeit des Holzbauteils in das Flüssigmedium, falls ein Tauchen stattfindet, beträgt vorzugsweise zwischen 30 Sekunden und 5 Minuten, weiter vorzugsweise zwischen 1 und 3 Minuten. Diese Zeit wurde experimentell als ausreichend belegt und ist ausreichend kurz für eine wirtschaftliche Realanwendung.

Der Beschichtungsaufbau kann transparent, transluzent oder auch deckend pigmentiert sein. Bezüglich einer transluszenten oder deckenden Ausführungsform können eines oder mehrere der weiteren Beschichtungsmittel Pigmente oder Füllstoffe enthalten. Beispiele umfassen Titandioxid, Eisenoxide, Ruß, Phthalocyanin-Pigmente, Diketopyrrolopyrrol-Pigement (DPP), Silikate wie Kaolin, Talk, Glimmer, Erdalkalicarbonate wie Calciumcarbonat, Alumosilikate wie Feldspat.

Das Beschichtungsmittel zum Erhalt der Deckschicht und, falls eine solche aufgetragen werden soll, das Beschichtungsmittel zum Erhalt der Zwischenschicht sind frei von der Vorkultur oder den Sporen des gegenüber holzzerstörenden und/oder holzverfärbenden Mikroorganismen antagonistisch wirkenden Pilzes und vorzugsweise generell frei von Zellen eines Pilzes.

Bei den Beschichtungsmitteln zum Erhalt von Deckbeschichtung und, falls vorhanden, Zwischenbeschichtung kann es sich um Lacksysteme handeln. Beispiele umfassen sowohl physikalisch härtende Lacke wie beispielsweise Dispersionslacke, als auch chemisch härtende oder strahlungsvernetzende Lacke wie beispielsweise Polyester-, Alkyd-, Epoxid-, Polyurethan-, Acryl- oder Silikonharzlacke.

In einer Ausführungsform handelt es sich bei dem Beschichtungsmittel zum Erhalt der Deckschicht um einen Lack mit einem wasserbasierten Lösungsmittel. In einer Ausführungsform handelt es sich bei dem Beschichtungsmittel zum Erhalt der Deckschicht um einen Lack mit einem organischen Lösungsmittel. In einer Ausführungsform handelt es sich bei dem Beschichtungsmittel zum Erhalt der Deckschicht um einen lösungsmittelfreien Lack.

In einer Ausführungsform handelt es sich bei dem Beschichtungsmittel zum Erhalt der Deckschicht um einen Pulverlack.

Das zu behandelnde bzw. beschichtende Holz ist vor der Anwendung des Verfahrens vorzugsweise frei von Schadpilzen. Mit anderen Worten handelt es sich bei dem Verfahren vorzugsweise um ein präventives Verfahren zum Schutz des Holzbauteils vor Pilzbefall.

Die antagonistischen Pilze sind vorzugsweise so gewählt, dass es zu keiner Verfärbung des Holzes kommt. Vorzugsweise ist das Imprägnierungsmittel farblos bzw. die Imprägnierung durchsichtig.

Das erfindungsgemäße Holzbauteil kann aus Massivholz, Vollholzwerkstoffen (wie Brettschichtholz oder lamellierte Teile) oder auch aus Holzspan- und Holzfaserwerkstoffen aufgebaut sein. Neben natürlichen Holz wie Fichte, Kiefer, Eiche, etc. kann auch modifiziertes Holz (z.B. thermisch oder chemisch behandelt) oder andere Holzwerkstoffe zur Anwendung kommen.

Die Erfindung betrifft weiterhin ein anhand des Verfahrens hergestelltes Holzbauteil mit einer mehrschichtigen Beschichtung und dessen Verwendung als Baustoff im Fenster-, Türen-, Terrassen-, Balkon- und konstruktiven Gebäudebau (z.B. Fassaden, Decken, Dächer) und Ingenieurholzbau (z.B. Hallen, Brücken, Türme), insbesondere für den Außenbereich.

Letztlich betrifft die Erfindung Pilze der Gattung Trichoderma, und zwar einerseits den oben näher beschriebenen Pilz Trichoderma harzianum (HFA 335), und andererseits den den oben näher beschriebenen Pilz Trichoderma virens (HFA 347), oder Sporen davon.

Die nachfolgend beschriebenen Ausführungsbeispiele und Experimente belegen die Effekte der Erfindung und offenbaren weiteren Einzelheiten. In den Figuren zeigen:
- Figur 1:: Proben des Beispiels 1 nach dem Bläueversuch.
- Figur 2:: Proben des Beispiels 3 nach dem Bläueversuch.
- Figur 3:: Proben des Beispiels 3 in den Versuchsgefäßen unmittelbar vor dem Ausbau aus dem Pilzversuch, jeweils 6 Parallelproben aufgeteilt auf 2 Prüfgefäße.
- Figur 4:: Proben des Beispiels 4a nach dem Bläueversuch und Tauchen der Proben in einer vermengten Suspension von Tr. harzianum (HFA 335) und Tr. virens (HFA 347).
- Figur 5:: Freilandexposition der mit Trichoderma behandelten Proben des Beispiels 4b bei Aufbau im 3 bzw. 4 Schicht-System.
- Figur 6:: Proben des Beispiels 4b bei Aufbau im 3-Schicht-Aufbau vor und nach Freilandexposition.
- Figur 7:: Proben des Beispiels 4b bei Aufbau im 4-Schicht-Aufbau vor und nach Freilandexposition.
- Figur 8:: Entwicklung der oberflächlichen Verblauungen der Proben des Beispiels 4b bei Aufbau im 3-Schicht-Aufbau im Zeitverlauf.
- Figur 9:: Entwicklung der oberflächlichen Verblauungen der Proben des Beispiels 4b bei Aufbau im 4-Schicht-Aufbau im Zeitverlauf.

### Beispiel 1 (Wirksamkeit ausgewählter Trichoderma-Stämme):

Im vorliegenden Beispiel wurde eine Serie an Versuchen angesetzt, bei denen Trichoderma direkt auf Holz kultiviert wurde, wobei die Vorkultur-Zeiten mit 1, 3, 6 und 8 Wochen erfolgten.

Wie die in Tabelle 1 aufgelisteten Ergebnisse zeigen, wiesen sämtliche mit Pilzen Tr. harzianum HFA 335 oder Pilzen Tr. virens HFA 347 durch Direktbewuchs auf Holz vorbehandelten Proben nach dem Bläueversuch mit Aureobasidium pullulans und Sydowia polyspora nur geringe Verblauungen auf (5 max - schlecht, 0 min - optimal). Die mittleren Verblauungsgrade lagen zwischen 0,2 und 0,8, auch bei der kürzesten Vorkultur-Variante von 1 Woche. Eine Verlängerung der Vorkultur-Zeit auf 8 Wochen ergab gleichwertige Ergebnisse. Zwischen den beiden Trichoderma-Stämmen war bezüglich Verblauungsgrad kein wesentlicher Unterschied festzustellen.

**Tabelle 1**

| Verblauungsgrade nach x Wochen Vorkultur auf Holz | | | | | | | | |
|---|---|---|---|---|---|---|---|---|
| 1 Woche | | 3 Wochen | | 6 Wochen | | 8 Wochen | | |
| HFA 335 | HFA 347 | HFA 335 | HFA 347 | HFA 335 | HFA 347 | HFA 335 | HFA 347 | Kontrollen |
| 1,0 | 0,0 | 0,5 | 1,0 | 1,0 | 0,5 | 1,0 | 0,0 | 3,0 |
| 0,5 | 0,5 | 1,0 | 0,0 | 1,0 | 1,0 | 0,5 | 0,5 | 3,0 |
| 1,0 | 0,0 | 0,0 | 0,0 | 1,0 | 0,5 | 0,0 | 0,0 | 3,0 |
| 0,5 | 0,0 | 0,0 | 0,0 | 1,0 | 0,0 | 0,5 | 0,0 | 3,0 |
| 1,0 | 0,0 | 0,5 | 0,5 | 1,0 | 1,0 | 0,0 | 1,0 | 3,0 |
| 1,0 | 0,5 | 0,0 | 0,0 | 0,0 | 1,0 | 0,5 | 0,0 | 3,0 |

| **Mittelwert:** | | | | | | | | |
|---|---|---|---|---|---|---|---|---|
| **0,8** | **0,2** | **0,3** | **0,3** | **0,8** | **0,7** | **0,4** | **0,3** | **3,0** |

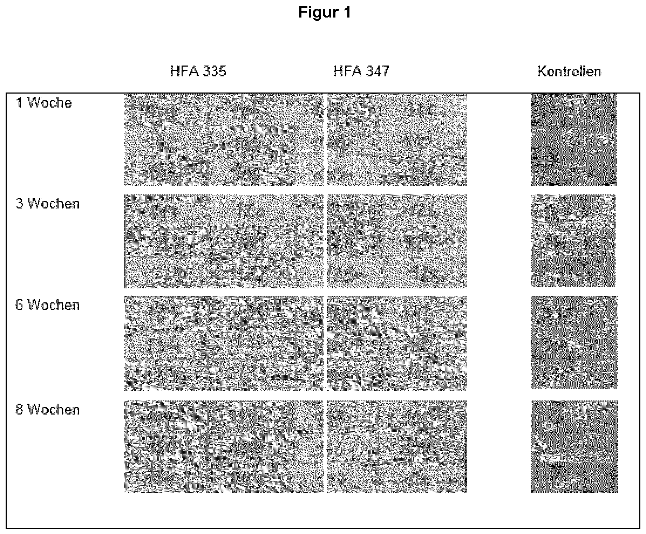

Figur 1 zeigt die Proben nach dem Bläueversuch. Links gezeigt sind die Proben nach Vorbehandlung mit Tr. harzianum (HFA 335). In der Mitte gezeigt sind die Proben nach Vorbehandlung 1, 3, 6 bzw. 8 Wochen mit Tr. virens (HFA 347) direkt auf Holz. Rechts gezeigt sind unbehandelte Kontrollen.

In Tabelle 2 sind die Masseverluste in % der mit Tr. harzianum (HFA 335) und Tr. virens (HFA 347) durch Direktbewuchs auf Holz vorbehandelten Proben nach 12 Wochen Pilzversuch mit Gloeophyllum trabeum und Rhodonia placenta angeführt.

**Tabelle 2**

| | | Masseverluste nach x Wochen Vorbewuchs auf Holz | | | | | | | |
|---|---|---|---|---|---|---|---|---|---|
| | | 1 Woche | | 3 Wochen | | 6 Wochen | | 8 Wochen | |
| | | HFA 335 | HFA 347 | HFA 335 | HFA 347 | HFA 335 | HFA 347 | HFA 335 | HFA 347 |
| *Gloeophyllum trabeum* (HFA 53) | | 17,7 | 35,3 | 2,0 | 15,0 | 52,1 | 51,3 | 28,2 | 1,0 |
| | | 59,4 | 16,2 | 2,0 | 30,2 | 45,2 | 28,5 | 9,8 | 40,1 |
| | | 0,7 | 6,1 | 8,8 | 18,4 | 49,3 | 10,9 | 1,8 | 9,9 |
| | | 1,3 | 51,8 | 15,0 | 11,7 | 48,8 | 37,6 | 60,3 | 65,5 |
| | | 34,5 | 16,3 | 8,0 | 12,7 | 5,4 | 23,0 | 16,8 | 11,3 |
| | | 52,1 | 9,2 | 26,0 | 15,8 | 1,1 | 23,1 | 8,0 | 27,0 |
| | **MW:** | **27,6** | **22,5** | **10,3** | **17,3** | **33,6** | **29,1** | **20,8** | **25,8** |
| *Rhodonia placenta* (HFA 58) | | 1,8 | 1,8 | 8,4 | 1,4 | 1,61 | 0,9 | 1,7 | 1,5 |
| | | 1,5 | 1,7 | 3,6 | 2,1 | 1,66 | 1,2 | 1,2 | 1,4 |
| | | 1,7 | 1,8 | 6,1 | 1,4 | 2,23 | 1,0 | 1,3 | 1,8 |
| | | 2,4 | 1,8 | 0,9 | 0,8 | 1,41 | 1,0 | 49,0 | 1,4 |
| | | 2,4 | 1,7 | 0,0 | 1,0 | 1,43 | 1,6 | 49,7 | 1,3 |
| | | 2,1 | 1,9 | 1,3 | 1,3 | 1,36 | 1,2 | 4,7 | 2,0 |
| | **MW:** | **2,0** | **1,8** | **3,4** | **1,3** | **1,6** | **1,1** | **18,0** | **1,6** |

Wie der Tabelle zu entnehmen ist, verhinderte ein Vorbewuchs mit Tr. virens (HFA 347) Holzabbau durch Rhodonia placenta bei allen untersuchten Vorbewuchs-Zeiträumen. Dies trifft für den Vorbewuchs mit Tr. harzianum (HFA 335) nicht für alle Zeiträume zu, sowohl nach 3 als auch 8 Wochen Vorbewuchs wiesen je 3 Proben Masseverluste > 3,0 % auf, in 2 Fällen (8 Wochen Vorbewuchs) lagen sogar Masseverluste von beinahe 50 % vor und damit war keine ausreichende Schutzwirkung gegeben. Es zeigt sich auch, dass Gloeophyllum trabeum der gegenüber den Antagonisten widerstandsfähigere, holzzerstörende Pilz ist. So waren bei Vorbehandlung durch Direktbewuchs bei beinahe allen Proben mittlere Masseverluste > 3,0 % vorhanden.

### Beispiel 2 (Wirksamkeit trotz Konservierung):

Um zu untersuchen, ob eine in Beschichtungsprodukten enthaltene Topfkonservierung mit fungizider und bakterizider Wirksamkeit die Aktivität der Trichoderma-Stämme unterbinden könnte, wurden die zwei oben genannten Trichoderma-Stämme auf Agarnährmedien zur Gewinnung von Sporensuspensionen und in Flüssigmedien vorkultiviert. Es wurden folgende Beschichtungsprodukte formuliert.

**Tabelle 3: Beschichtungsprodukte**

| Produkt | Beschreibung |
|---|---|
| 36150-0032-01 | ohne Topfkonservierung, ohne Biozide |
| 36150-0032-02 | Standardprodukt (Topfkonservierung, 0,4 % Tebuconazol, 0,8 % IPBC) |
| 36150-0032-03 | mit Topfkonservierung, ohne Biozide |

Diesen Beschichtungsprodukten wurden je 10 % der abfiltrierten Trichoderma-Flüssigkultur sowie der Sporensuspensionen zugesetzt und davon je 0,5 ml auf MEA-Nährmedien ausplattiert (je 3 Parallelproben). Die Sporensuspensionen ließen sich ohne erkennbare Veränderungen in die jeweiligen Produkte einarbeiten, bei Zusatz der Flüssigmedien kam es jedoch bei allen Produkten sofort zu Ausfällungen, ev. bedingt durch den niedrigen pH-Wert der Flüssigkultur. Das bedeutet für die Folgeversuche im Labor und Freiland, dass die Sporensuspension in die Imprägnierung eingearbeitet werden kann und so ein 3-Schicht-Aufbau möglich ist. Das Flüssigmedium muss hingegen - zumindest vorerst - in einem eigenen Schritt auf Holz aufgebracht werden und somit ist ein 4-Schicht-Aufbau erforderlich. Wie aus Tabelle 4 ersichtlich ist, hatte die Topfkonservierung keinen Einfluss auf das Wachstum der beiden eingesetzten Trichoderma-Stämme.

**Tabelle 4: Ergebnisse der Untersuchung auf Überlebens- und Wachstumsfähigkeit von Tr. harzianum (HFA 335) und Tr. virens (HFA 347) in 5 Beschichtungsprodukten (+ Tr. Wachstum; - kein Tr. Wachstum)**

| Produkt | Flüssigkultur | | Sporensuspension | | Kontrolle ohne Tr. |
|---|---|---|---|---|---|
| | HFA 335 | HFA 347 | HFA 335 | HFA 347 | |
| 36150-0032-01 | + | + | + | + | - |
| 36150-0032-02 | - | - | - | - | - |
| 36150-0032-03 | + | + | + | + | - |
| Kontrolle (ohne Produkt) | + | + | + | + | - |

Eine in Beschichtungsprodukten enthaltene Topfkonservierung mit fungizider und bakterizider Wirksamkeit unterbindet die Aktivität der Trichoderma-Stämme demnach nicht. Daher ist die Umsetzung eines Imprägnierungsmittels mit enthaltener Topfkonservierung möglich, zur Gewährleistung der notwendigen Produkt-Haltbarkeit.

### Beispiel 3 (Wirksamkeit trotz kurzer Tauchzeit):

Es wurden Versuche mit Vorkultur der Trichoderma-Stämme in Flüssigmedium (je 10 % der abfiltrierten Trichoderma-Flüssigkultur sowie der Sporensuspensionen der Imprägnierung zugesetzt) und Variation der Tauchzeiten (2 Minuten - 30 Minuten - 60 Minuten - 240 Minuten) durchgeführt. Die getauchten Holzproben wurden anschließend holzverfärbenden und holzzerstörenden Pilzen ausgesetzt.

Tabelle 5 zeigt Verblauungsgrade (5 max - schlecht, 0 min - optimal) der mit Tr. harzianum (HFA 335) und Tr. virens (HFA 347) durch unterschiedlich langes Tauchen in Flüssigkultur vorbehandelten Proben nach 6 Wochen Pilzversuch mit Aureobasidium pullulans und Sydowia polyspora.

**Tabelle 5:**

| Verblauungsgrade nach x Minuten Tauchzeit | | | | | | | | |
|---|---|---|---|---|---|---|---|---|
| 2 Minuten | | 30 Minuten | | 60 Minuten | | 240 Minuten | | |
| HFA 335 | HFA 347 | HFA 335 | HFA 347 | HFA 335 | HFA 347 | HFA 335 | HFA 347 | Kontrollen |
| 3,0 | 0,0 | 1,5 | 0,0 | 0,5 | 0,0 | 0,5 | 0,0 | 3,0 |
| 3,0 | 0,0 | 1,5 | 0,0 | 2,0 | 0,0 | 1,5 | 1,0 | 3,0 |
| 3,0 | 0,0 | 2,0 | 0,0 | 1,5 | 0,0 | 1,5 | 0,0 | 3,0 |
| 2,0 | 0,0 | 1,5 | 0,0 | 2,0 | 0,0 | 2,5 | 0,0 | 3,0 |
| 2,5 | 0,0 | 0,5 | 0,0 | 1,5 | 0,0 | 1,0 | 0,0 | 3,0 |
| 2,5 | 0,0 | 1,0 | 0,0 | 2,0 | 0,0 | 1,5 | 0,0 | 3,0 |

| **Mittelwert:** | | | | | | | | |
|---|---|---|---|---|---|---|---|---|
| **2,7** | **0,0** | **1,3** | **0,0** | **1,6** | **0,0** | **1,4** | **0,2** | **3,0** |

Wie die in Tabelle 5 aufgezeichneten Ergebnisse zeigen, wurden bei Vorbehandlung der Holzproben durch Tauchen in eine Flüssigkultur von Tr. virens (HFA 347), bei allen untersuchten Tauchzeiten bläuefreie Oberflächen erzielt, selbst eine Tauchzeit von 2 Minuten war ausreichend. Lediglich eine Probe wies, bei einer Tauchzeit von 240 Minuten, geringen Bläuebewuchs auf. Wurden die Proben in eine Flüssigkultur von Tr. harzianum (HFA 335) getaucht, so war bei genauer Betrachtung der vier Probenoberflächen, keine der Proben komplett frei von Verblauungen.

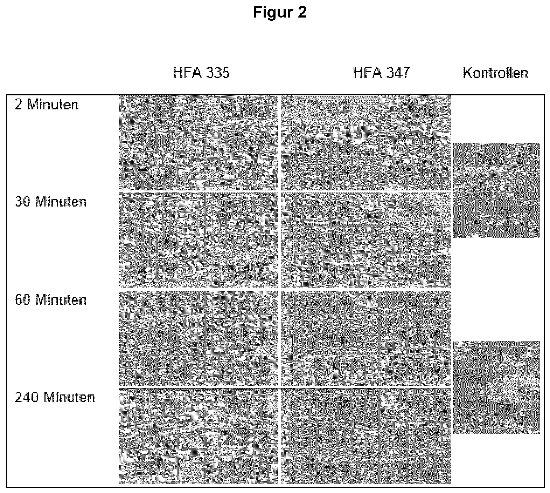

Figur 2 zeigt die Proben nach dem Bläueversuch. Links abgebildet sind die Proben nach Vorbehandlung mit Tr. harzianum (HFA 335). In der Mitte abgebildet sind die Proben nach Vorbehandlung mit Tr. virens (HFA 347) nach 2, 30, 60 bzw. 240 Minuten Tauchzeit. Rechts abgebildet sind unbehandelte Kontrollen.

Wie in Figur 2 zu sehen ist, wies jedoch, trotz teilweiser Bewertung von 3,0, keine der Oberflächen dermaßen augenscheinliche, massive Verblauungen auf wie die unbehandelten Kontrollen. Bei einer Tauchzeit von 2 Minuten wurden die Oberflächen im Mittel mit 2,7 bewertet, was einer starken Verblauung entspricht. Nach Tauchzeiten von 30, 60 bzw. 240 Minuten waren deutlich geringere Verblauungen festzustellen, wobei die Verlängerung der Tauchzeit von 30 auf 240 Minuten zu keiner Reduzierung der Verblauungen führte.

In Tabelle 6 sind die Masseverluste der in Flüssigkultur Masseverluste der mit Tr. harzianum (HFA 335) und Tr. virens (HFA 347) vorbehandelten Proben bei unterschiedlichen Tauchzeiten nach dem Versuch mit holzzerstörenden Pilzen (Gloeophyllum trabeum und Rhodonia placenta) angeführt.

**Tabelle 6:**

| | | Masseverluste nach x Minuten Tauchzeit | | | | | | | |
|---|---|---|---|---|---|---|---|---|---|
| | | 2 Minuten | | 30 Minuten | | 60 Minuten | | 240 Minuten | |
| | | HFA 335 | HFA 347 | HFA 335 | HFA 347 | HFA 335 | HFA 347 | HFA 335 | HFA 347 |
| *Gloeophyllum trabeum* (HFA 53) | | 51,5 | 34,7 | 1,4 | 0,7 | 0,9 | 1,2 | 0,2 | 13,1 |
| | | 18,0 | 59,8 | 0,7 | 0,7 | 1,3 | 6,4 | 45,0 | 12,9 |
| | | 61,6 | 38,0 | 1,6 | 1,1 | 24,6 | 37,4 | 10,3 | 54,6 |
| | | 1,3 | 49,4 | 1,3 | 42,7 | 1,2 | 52,8 | 1,3 | 7,7 |
| | | 15,1 | 54,2 | 0,7 | 0,4 | 28,6 | 60,8 | 0,2 | 45,2 |
| | | 65,2 | 38,2 | 0,8 | 29,6 | 10,0 | 5,2 | 1,5 | 3,4 |
| | **MW:** | **35,5** | **45,7** | **1,1** | **12,5** | **11,1** | **27,3** | **9,8** | **22,8** |
| *Rhodonia placenta* (HFA 58) | | 0,8 | 53,5 | 0,8 | 0,4 | 0,3 | 8,2 | 0,4 | 0,4 |
| | | 0,7 | 22,1 | 1,1 | 1,1 | 1,0 | 38,5 | 1,2 | 0,1 |
| | | 0,4 | 38,8 | 0,7 | 1,4 | 1,1 | 58,7 | 1,3 | 0,4 |
| | | 1,0 | 2,2 | 0,3 | 0,5 | 0,3 | 3,8 | 0,8 | 1,1 |
| | | 0,5 | 1,2 | 0,8 | 0,8 | 1,2 | 25,0 | 1,0 | 1,1 |
| | | 0,8 | 1,2 | 0,2 | 0,7 | 0,0 | 0,0 | 1,4 | 0,3 |
| | **MW:** | **0,7** | **19,8** | **0,7** | **0,8** | **0,6** | **22,4** | **1,0** | **0,6** |

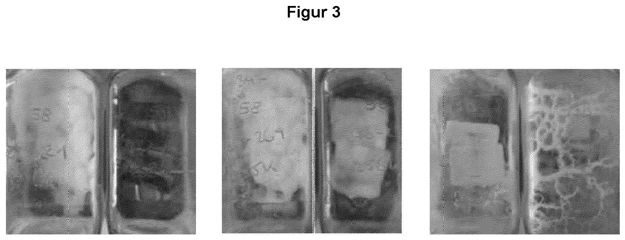

Figur 3 zeigt die Proben in den Versuchsgefäßen unmittelbar vor dem Ausbau aus dem Pilzversuch, jeweils 6 Parallelproben aufgeteilt auf 2 Prüfgefäße. In der linken Darstellung sind im linken Prüfgefäß alle Proben von Rhodonia placenta überwachsen, darunter ist Bewuchs durch Tr. virens (HFA 347) zu sehen, und im rechten Prüfgefäß ist offensichtlich, dass Tr. virens (HFA 347) Rhodonia placenta und die Holzproben komplett überwachsen hat. In der Mitte ist in beiden Prüfgefäßen zu sehen, dass Rhodonia placenta die Holzproben überwachsen hat, aber Tr. virens (HFA 347) darunter deutlich ausgebreitet ist. In der rechten Abbildung hat im linken Prüfgefäß Gloeophyllum trabeum 2 Proben und die unbehandelte Kontrolle überwachsen, eine Probe wurde von Tr. virens (HFA 347) überwachsen.

Eine Vorbehandlung mit Tr. harzianum (HFA 335) verhinderte Holzabbau durch Rhodonia placenta in allen Fällen. Selbst 2 Minuten Tauchzeit waren für eine Schutzwirkung bereits ausreichend. Bei Vorbehandlung mit Tr. virens (HFA 347) hingegen war dies bei Tauchzeiten von 30 und 240 Minuten der Fall, nicht hingegen bei 2 und 60 Minuten. Wie Tabelle 6 zu entnehmen ist, traten bei den 6 Parallelproben z.T. große Unterschiede der Masseverluste auf. Im Pilzversuch waren von den 6 Parallelproben jeweils 3 mit einer unbehandelten Kontrolle in einem Prüfgefäß inkubiert. Im Falle der Vorbehandlung mit Tr. virens (HFA 347) und 2 Minuten Tauchzeit waren die Ergebnisse klar entsprechend der beiden Prüfgefäße zuordenbar, in einem lagen bei allen 3 Proben hohe Masseverluste vor, im zweiten keine (Figur 3, links). Bei 60 Minuten Tauchzeit hingegen wurden ebenfalls sehr unterschiedliche Masseverluste erzielt, allerdings lag hier keine klare Unterscheidung anhand der Prüfgefäße vor, sondern zwischen den einzelnen Proben. In den Prüfgefäßen und auf den Hölzern waren sowohl Trichoderma als auch der holzzerstörende Pilz sichtbar (Figur 3, Mitte). Welcher der Pilze die Oberhand im Kampf um das Holz für sich entschied, war nicht augenscheinlich, sondern erst anhand der Masseverluste festzustellen. Es ist davon auszugehen, dass hier der in der Literatur beschriebene Effekt der Versuchsbedingungen zum Tragen kommt. Damit ist gemeint, dass selbst dann, wenn die Versuchsbedingungen vermeintlich für alle Proben gleich sind, geringe bis geringste Unterschiede das fein ausbalancierte System zwischen holzzerstörendem Pilz und Antagonisten, in die eine oder andere Richtung lenken.

Gloeophyllum trabeum ist offensichtlich widerstandsfähiger gegenüber den eingesetzten Trichoderma-Stämmen als Rhodonia placenta. Nur in einem Fall, bei Vorbehandlung der Holzproben mit Tr. harzianum (HFA 335) und 30 Minuten Tauchzeit, wies keine der 6 Parallelproben Masseverluste auf. Bei 60 und 240 Minuten Tauchzeit wiesen jedoch 3 bzw. 2 Proben erhebliche Masseverluste auf. Auch hier kam möglicherweise der weiter oben beschriebene Effekt der Versuchsbedingungen zum Tragen. Auch wenn bei vielen Proben eine Wirksamkeit der Antagonisten nachweisbar ist, bei einzelnen Proben ist diese offensichtlich nicht ausreichend und der holzzerstörende Pilz kann dann die Vorherrschaft übernehmen (Figur 3, rechts). Klar ersichtlich ist aus Tabelle 6 auch, dass ein Effekt der Tauchzeit vorhanden ist. So wurden bei 2 Minuten Tauchzeit der Proben in Flüssigkultur gegen Gloeophyllum trabeum deutlich höhere mittleren Masseverluste erzielt als bei längeren Tauchzeiten.

### Beispiel 4 (Wirksamkeit im Schichtsystem):

Für die Versuchsserie zur Wirksamkeit bei Aufbau eines 3 bzw. 4 Schicht Systems, bei dem die erste Schicht entweder ein Trichoderma bewachsenes Flüssigmedium, eine Sporensuspension oder eine Imprägnierung mit eingearbeitetem Antagonisten ist, wurden Holzproben der Größe 110 x 40 x 10 mm hergestellt und deren Hirnhölzer versiegelt. Die Prüfstämme wurden auf Agar bzw. in Flüssigmedien vorkultiviert. Durchgeführt werden Versuche sowohl im Freiland als auch im Labor.

Untersucht werden die beiden Trichoderma-Stämme Tr. harzianum (HFA 335) und Tr. virens (HFA 347). Wie bereits zuvor angeführt, konnte die Sporensuspension in die Imprägnierung eingearbeitet werden, dadurch war ein 3-Schicht-Aufbau mit Imprägnierung inkl. Sporensuspension - Zwischenbeschichtung - Deckbeschichtung möglich. Das Flüssigmedium wurde in einem eigenen Schritt aufgebracht und erst anschließend die Imprägnierung. Der weitere Beschichtungsaufbau erfolgte wie zuvor angegeben.

Es wurde auch untersucht, ob bei einem gemeinsamen Einsatz der beiden Trichoderma-Stämme gegenüber beiden Gruppen an Zielorganismen eine gute Wirksamkeit besteht. Dazu wurden die Trichoderma-Stämme wie bereits geschrieben, getrennt, in Flüssigmedium vorkultiviert. Die gewonnenen Suspensionen der beiden Pilze wurden anschließend vermengt und sterilisierte Holzproben für 2 bzw. 30 Minuten darin getaucht. Parallel dazu wurden sterilisierte Holzproben mittels Vakuum-Imprägnierung mit der Suspension der beiden Pilze getränkt. Dabei wurden die Holzproben in sterile Gefäße eingebracht, mit Pilzsuspension überschichtet und anschließend für 20 Minuten einem Unterdruck von 4 kPa ausgesetzt. Die derart mit den Antagonisten behandelten Holzproben wurden dann, wie ebenfalls bereits beschrieben, in Pilzversuche gegen Holz verfärbende sowie Holz zerstörende Pilze eingebracht.

Folgende Variablen wurden untersucht:
(1) Flüssigmedium im 4-Schicht-Aufbau: Flüssigmedium; Imprägnierung; Zwischenbeschichtung; Deckbeschichtung
(2) Sporensuspension im 3-Schicht-Aufbau: Imprägnierung mit eingearbeiteter Sporensuspension; Zwischenbeschichtung; Deckbeschichtung
(3) Eine zusätzliche Serie mit einer künstlichen Verletzung für die Proben im Labor gegen holzverfärbende Pilze

Als Referenz wurde das Standardprodukt mit Standardaufbau der Firma Adler Lacke eingesetzt.

### Beispiel 4a (Laborversuche):

Die Proben im Labor gegen holzzerstörende Pilze werden ohne Zwischen- und Deckbeschichtung ausgeführt, da dieser gute physikalische Schutz im Laborversuch üblicherweise eine Befeuchtung der Proben verhindert und dann nicht festgestellt werden kann, ob der Schutz durch den Antagonisten bzw. den Wirkstoff zurückzuführen ist oder auf den Feuchteschutz.

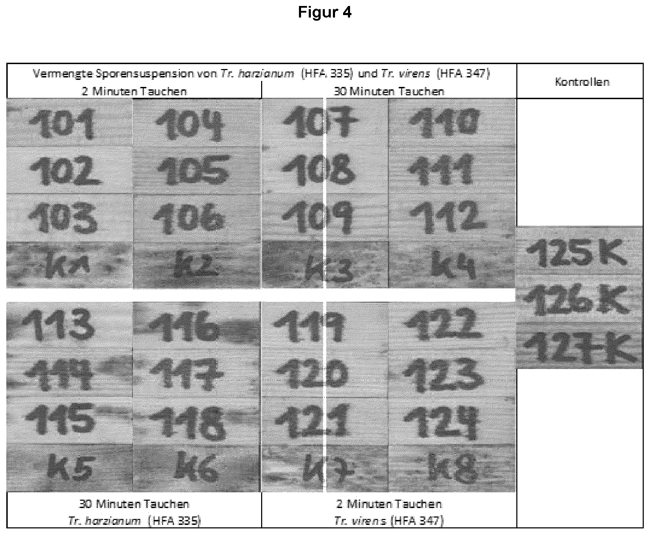

Die Ergebnisse sind in Tabelle 7 angegeben und in Figur 4 dargestellt.

**Tabelle 7**

| Mittlerer Verblauungsgrad nach x Minuten Tauchzeit | | | | |
|---|---|---|---|---|
| Vermengte Flüssigkultur von | | Flüssigkultur von | | |
| *Tr. harzianum* (HFA 335) 2 Minuten | und *Tr. virens* (HFA 347) 30 Minuten | *Tr. harzianum* (HFA 335) 30 Minuten | *Tr. virens* (HFA 347) 2 Minuten | Kontrollen |
| 1,0 | 0,0 | 2,0 | 0,0 | 3,0 |
| 0,0 | 1,0 | 2,0 | 1,0 | 3,0 |
| 0,0 | 1,0 | 2,0 | 0,0 | 3,0 |
| 0,0 | 1,0 | 2,0 | 0,0 | |
| 0,0 | 1,0 | 1,0 | 1,0 | |
| 0,0 | 1,0 | 2,0 | 1,0 | |
| **Mittelwert: 0,2** | **Mittelwert: 0,8** | **Mittelwert: 1,8** | **Mittelwert: 0,5** | **Mittelwert: 3,0** |

Figur 4 zeigt die Proben nach dem Bläueversuch und Tauchen der Proben in einer vermengten Suspension von Tr. harzianum (HFA 335) und Tr. virens (HFA 347). Oben dargestellt sind Proben nach 2 bzw. 30 Minuten Tauchen in der vermengten Sporensuspension beider Trichoderma-Stämme. Unten dargestellt sind Proben nach 2 bzw. 30 Minuten Tauchen in den Suspensionen von Tr. harzianum (HFA 335) oder Tr. virens (HFA 347). Rechts dargestellt sind unbehandelte Kontrollen.

Mit Tr. harzianum (HFA 335) war zwar gegenüber den unbehandelten Kontrollen eine deutlich geringere, aber doch augenscheinliche Verblauung feststellbar, die im Mittel mit 1,8 bewertet wurde. Bei Einsatz von Tr. virens (HFA 347) waren nur geringe oberflächliche Verblauungen zu registrieren, der mittlere Verblauungsgrad lag bei 0,5. Wurden die beiden Flüssigkulturen vermengt eingesetzt, resultierten mittlere Verblauungsgrade von 0,2 bzw. 0,8.

Der Einsatz der vermengten Suspensionen von Tr. harzianum (HFA 335) und Tr. virens (HFA 347) führte zu keiner weiteren Reduzierung der Verblauungen gegenüber der Suspension von Tr. virens (HFA 347). Die erzielten mittleren Verblauungsgrade von 0,2 und 0,8 bzw. 0,5 sind der grundsätzlichen Schwankung bei biologischen Versuchen zuzurechnen.

Tabelle 8 zeigt Masseverluste der durch Tauchen in einer vermengten Flüssigkultur von Tr. harzianum (HFA 335) und Tr. virens (HFA 347) vorbehandelten Proben nach 12 Wochen Pilzversuch mit Coniophora puteana, Gloeophyllum trabeum und Rhodonia placenta.

**Tabelle 8:**

| Massewrluste | | | | | |
|---|---|---|---|---|---|
| 2 Minuten Tauchzeit | | | 30 Minuten Tauchzeit | | |
| C. puteana (HFA 10) | G. trabeum (HFA 53) | Rh. placenta (HFA 58) | C. puteana (HFA 10) | G. trabeum (HFA 53) | Rh. placenta (HFA 58) |
| 0,92 | 45,5 | 0,56 | 1,38 | 31,7 | 0,02 |
| 0,44 | 0,54 | 1,00 | 2,07 | 15,5 | 1,54 |
| 0,00 | 52,8 | 1,03 | 0,49 | 32,9 | 1,87 |
| 0,52 | 19,6 | 1,76 | 0,60 | 1,38 | 0,41 |
| 10,4 | 11,9 | 1,23 | 0,00 | 1,34 | 0,49 |
| 1,05 | 15,0 | 0,49 | 0,00 | 0,98 | 1,15 |
| **2,2** | **24,2** | **1,0** | **0,8** | **14,0** | **0,9** |

| **Mittelwert Kontrollen:** | | | | | |
|---|---|---|---|---|---|
| **35,1** | **58,5** | **35,6** | **35,6** | **55,0** | **34,8** |

Wie daraus zu entnehmen ist, verhinderte eine Vorbehandlung mit der vermengten Suspension beider Pilze Holzabbau durch Rhodonia placenta sowohl bei 2 als auch bei 30 Minuten Tauchen. Gegenüber Coniophora puteana wurde ebenfalls eine sehr gute Schutzwirkung erzielt, nach 30 Minuten Tauchzeit wies keine der 6 Parallelproben einen nennenswerten Masseverlust auf.

Ersichtlich ist aus Tabelle 8 weiterhin, dass eine Tauchzeit von 30 Minuten eine etwas bessere Schutzwirkung bewirkte als eine Tauchzeit von 2 Minuten. Auch diesmal wiesen die Parallelproben keine vergleichbar hohen Masseverluste auf, mit Masseverlusten zwischen 0,98 % bis 32,9 % wiesen die Proben aber eine recht große Spannweite auf. Vermutlich ist dies auf kleine Unterschiede, die das fein ausbalancierte System zwischen Holz zerstörendem Pilz und Antagonisten in die eine oder andere Richtung lenken zurückzuführen.

### Beispiel 4b (Feldversuche):

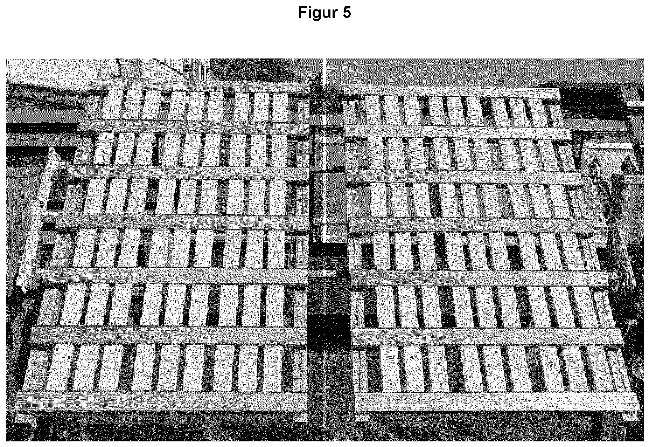

Die Proben für die Versuchsserie zur Wirksamkeit bei Aufbau eines 3 bzw. 4 Schicht Systems wurden auch im Freiland exponiert. Bei diesem Versuchsaufbau war die erste Schicht entweder ein Trichoderma bewachsenes Flüssigmedium oder eine Imprägnierung mit eingearbeitetem Antagonisten. Exponiert wurden die Proben im Freiland bei 45°, nach Südwesten orientiert, wie in Figur 5 zu sehen ist.

Nach 4, 8, 12, 16, 20, 26, 37, 41, 45, 48, 51, 53 und 57 Wochen Freilandexposition wurde jeweils eine Beurteilung der Probenoberflächen auf Bläuebewuchs durchgeführt. Dazu wurde der in EN 16492, Tabelle A.3 definierte Bewertungsschlüssel, der in Tabelle 9 angegeben ist, herangezogen.

**Tabelle 9:**

| Bewertungsziffer | Prozentualer Flächenanteil des Bewuchses bzw. der Verblauung |
|---|---|
| 0 | Kein Bewuchs auf der Oberfläche der Probe |
| 1 | bis zu 10 % Bewuchs an der Oberfläche der Probe |
| 2 | über 10 % bis zu 30 % Bewuchs an der Oberfläche der Probe |
| 3 | über 30 % bis zu 50 % Bewuchs an der Oberfläche der Probe |
| 4 | über 50 % bis zu 100 % Bewuchs an der Oberfläche der Probe |

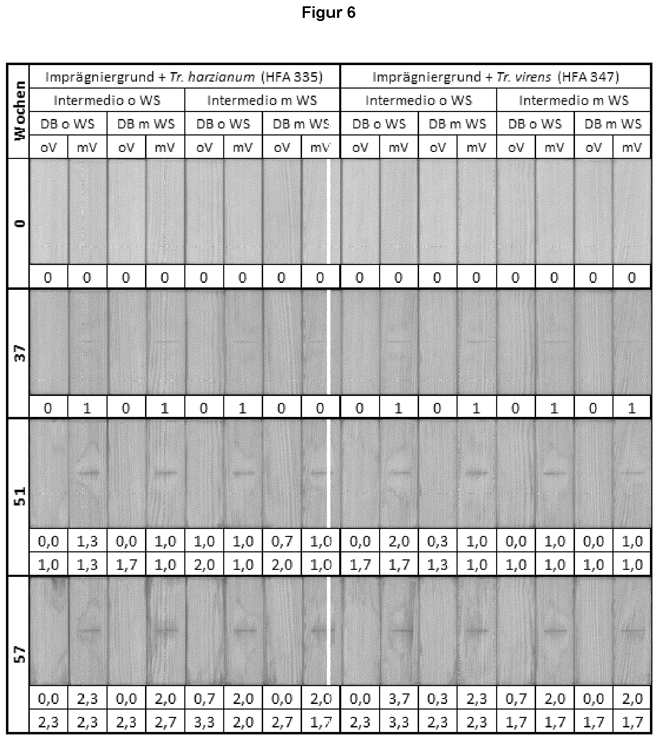

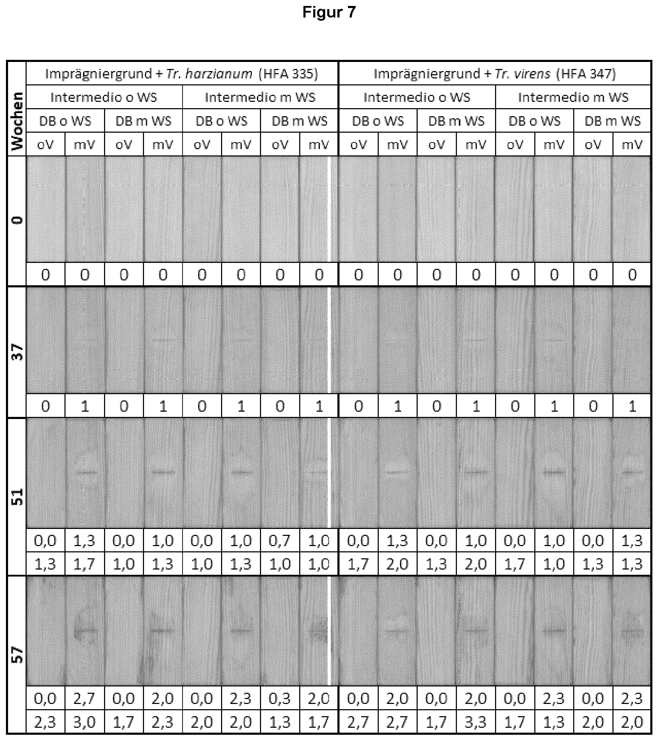

In Figuren 6-7 ist jeweils eine der drei Parallelproben vor Exposition im Freiland (0 Wochen) und nach 37, 51 und 57 Wochen Freilandexposition bildlich dargestellt. Figur 6 betrifft den Aufbau im 3-Schicht-System und Figur 7 den Aufbau im 4-Schicht-System. In den Figuren bedeuten DB = Deckbeschichtung, o WS = ohne Wirkstoff, m WS = mit Wirkstoff, oV = ohne Verletzung, und mV = mit Verletzung. Ab 51 Wochen: die obere Reihe stellt die Bewertung der Oberfläche dar, die untere Reihe jene der Kanten. Unter dem jeweiligen Foto ist der Mittelwert der Bewertungsziffern der 3 Parallelproben angeführt. Ab Woche 45 wurde die Bewertung getrennt für die Probenoberfläche und -kanten durchgeführt, da ab diesem Zeitpunkt erkennbar war, dass bei einige Proben Vergrauungen und Verblauungen, ausgehend von den Kanten erfolgten.

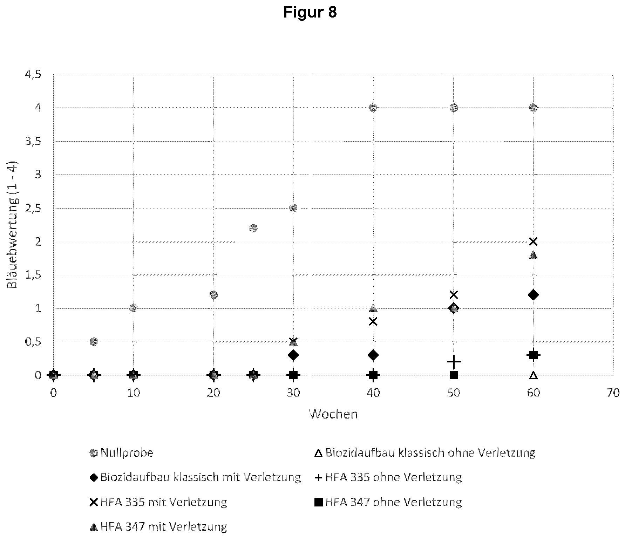

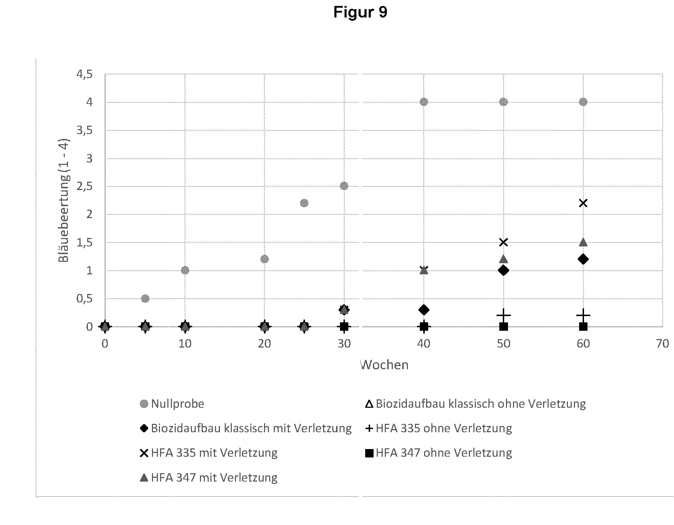

In Figuren 8-9 ist die Entwicklung der oberflächlichen Verblauungen grafisch dargestellt. Figur 8 zeigt Entwicklung der oberflächlichen Verblauungen der Proben bei Aufbau im 3 Schicht-System im Zeitverlauf. Figur 9 zeigt Entwicklung der oberflächlichen Verblauungen der Proben bei Aufbau im 4 Schicht-System im Zeitverlauf.

Nach 26 Wochen waren sämtliche Probenoberflächen der mit Trichoderma im 3 oder 4 Schicht-Aufbau behandelten Oberflächen sowie jene der Referenzproben frei von Bläuebewuchs. Nach 37 Wochen wiesen erstmals jene Proben mit Verletzungen an der Oberfläche, ausgehend von den Verletzungen, geringe Verblauungen auf, die sich bis 45 Wochen geringfügig ausweiteten. Lediglich die im 3 Schicht-Aufbau behandelten Proben, mit Wirkstoffausrüstung sowohl im Intermedio als auch in der Deckbeschichtung wiesen nach 37 Wochen noch keine Verblauungen auf, Verblauungen waren erstmals nach 45 Wochen erkennbar. Sowohl bei den im 3 oder 4 Schicht-Aufbau behandelten Proben mit Verletzung war zwischen Woche 51 und 53 eine deutliche Zunahme der Verblauungen zu beobachten. Ein Unterschied zwischen den mit Trichoderma harzianum bzw. Trichoderma virens behandelten Proben war nicht erkennbar.

Eine geringfügige Verblauung an den Referenzproben trat erstmal nach 37 Wochen an einer Probe mit künstlicher Verletzung auf der Oberfläche auf. Nach 45 Wochen waren an den Kanten dieser Probe leichte Vergrauungen festzustellen. Bei den Referenzproben ohne Verletzung zeigten sich derartige geringe Vergrauungen und Verblauungen, ausgehend von den Kanten, erst nach 51 Wochen.

Die unbehandelten Kontrollen wiesen bereits nach 4 Wochen ersten Bewuchs durch Bläuepilze auf, nach 20 Wochen war eine der 6 Wiederholproben bereits mit 2 zu bewerten. Nach 26 Wochen lag die mittlere Bewertungsziffer bei 2,2, nach 37 Wochen bei 3,3 und nach 45 Wochen waren alle Probenoberflächen mit 4 zu bewerten.

Die Ergebnisse der Versuche des Beispiels 4 insgesamt zeigen auf, dass Tr. harzianum (HFA 335) gegenüber Holz zerstörenden Pilzen eine bessere Wirksamkeit als Tr. virens (HFA 347) aufwies. Gegenüber Holz verfärbenden Pilzen hingegen wies Tr. virens (HFA 347) eine bessere Wirksamkeit als Tr. harzianum (HFA 335) auf.

## Patentansprüche

1. Verfahren zur Herstellung eines an wenigstens einer Oberfläche beschichteten Holzbauteils, das einen biologischen Schutz gegen Befall durch holzzerstörende und/oder holzverfärbende Pilze aufweist, umfassend die Imprägnierung des Holzbauteils durch Auftragung eines Imprägnierungsmittels auf die Oberfläche, sowie die nachgelagerte Auftragung eines vom Imprägnierungsmittel verschiedenen weiteren Beschichtungsmittels auf die imprägnierte Oberfläche zum Erhalt einer Deckschicht,
wobei das Imprägnierungsmittel mit einer Vorkultur von und/oder mit Sporen eines gegenüber holzzerstörenden und/oder holzverfärbenden Mikroorganismen antagonistisch wirkenden Pilzes versetzt ist, oder dass zumindest die zu beschichtende Oberfläche des Holzbauteils vor der Auftragung des Imprägnierungsmittels in ein Flüssigmedium getaucht wird, welches mit einer Vorkultur und/oder mit Sporen eines gegenüber holzzerstörenden und/oder holzverfärbenden Mikroorganismen antagonistisch wirkenden Pilzes versetzt ist;
wobei das Beschichtungsmittel zum Erhalt der Deckschicht frei von einer Vorkultur oder Sporen des gegenüber holzzerstörenden und/oder holzverfärbenden Mikroorganismen antagonistisch wirkenden Pilzes ist;
wobei es sich bei dem gegenüber holzzerstörenden und/oder holzverfärbenden Mikroorganismen antagonistisch wirkenden Pilz um einen Pilz der Gattung Trichoderma handelt; und
wobei das Imprägnierungsmittel ein Topfkonservierungsmittel aufweist, ausgewählt aus der Gruppe der Isothiazolinone Bronopol, oder einem Pyrithion.

2. Verfahren nach Anspruch 1, **dadurch gekennzeichnet, dass** es sich bei dem Pilz um einen Pilz der Gattung Trichoderma mit der wissenschaftlichen Bezeichnung Trichoderma harzianum, welcher am 17. April 2024 beim DSMZ hinterlegt wurde (Bezugszeichen der Hinterleger: HFA 335) und die Eingangsnummer DSM 34998 erhalten hat, einen Pilz der Gattung Trichoderma mit der wissenschaftlichen Bezeichnung Trichoderma virens, welcher am 17. April 2024 beim DSMZ hinterlegt wurde (Bezugszeichen der Hinterleger: HFA 347) und die Eingangsnummer DSM 35005 erhalten hat, oder eine Kombination daraus handelt.

3. Verfahren nach einem der vorhergehenden Ansprüche, **dadurch gekennzeichnet, dass** die Eintauchzeit des Holzbauteils in das Flüssigmedium zwischen 30 Sekunden und 5 Minuten beträgt, vorzugsweise zwischen 1 und 3 Minuten.

4. Verfahren nach einem der vorhergehenden Ansprüche, **dadurch gekennzeichnet, dass** das mit der Vorkultur und/oder den Sporen versetzte Imprägnierungsmittel in einem vorgelagerten Verfahrensschritt hergestellt wird, indem einem bestehenden Imprägnierungsmittel ein Flüssigmedium zugegeben wird, welches mit der Vorkultur und/oder den Sporen versetzt ist.

5. Verfahren nach einem der vorhergehenden Ansprüche, **dadurch gekennzeichnet, dass** das Imprägnierungsmittel Bindemittel umfasst, insbesondere solche aus der Gruppe der Alkyd-, Polyurethan-, oder Acrylharze.

6. Verfahren nach einem der vorhergehenden Ansprüche, **dadurch gekennzeichnet, dass** das Imprägnierungsmittel Hilfsmittel umfasst, insbesondere Netz- und Dispergiermittel, Co-Lösemittel, Entschäumer, Lichtschutzmittel, Hydrophobiermittel, Verdicker oder Fasern.

7. Verfahren nach einem der vorhergehenden Ansprüche, **dadurch gekennzeichnet, dass** das weitere Beschichtungsmittel ein oder mehrere Pigmente oder Füllstoffe enthält.

8. Verfahren nach einem der vorhergehenden Ansprüche, **dadurch gekennzeichnet, dass** es sich bei dem Verfahren um ein präventives Verfahren zum Schutz des Holzbauteils vor Pilzbefall handelt und das Holz vor der Anwendung des Verfahrens frei von Schadpilzbefall ist.

9. Holzbauteil mit einer Beschichtung an wenigstens einer der Oberflächen und mit einem biologischen Schutz gegen Befall durch holzzerstörende und/oder holzverfärbende Pilze, hergestellt durch ein Verfahren nach einem der vorhergehenden Ansprüche.

10. Verwendung eines Holzbauteils nach Anspruch 9 als Baustoff im Fenster-, Türen., Fassaden-, Balkon- und Gebäudebau, insbesondere im Außenbereich.

11. Pilz der Gattung Trichoderma mit der wissenschaftlichen Bezeichnung Trichoderma harzianum, welcher am 17. April 2024 beim DSMZ hinterlegt wurde (Bezugszeichen der Hinterleger: HFA 335) und die Eingangsnummer DSM 34998 erhalten hat, oder Sporen davon.

12. Pilz der Gattung Trichoderma mit der wissenschaftlichen Bezeichnung Trichoderma virens, welcher am 17. April 2024 beim DSMZ hinterlegt wurde (Bezugszeichen der Hinterleger: HFA 347) und die Eingangsnummer DSM 35005 erhalten hat, oder Sporen davon.

## Claims

1. A method for manufacturing a wood component having a coating on at least one surface and providing biological protection against infestation by wood-destroying 5 and/or wood-discolouring fungi, comprising the impregnation of the wood component by application of an impregnating agent to the surface, and the subsequent application of a further coating material, which is different from the impregnating agent, to the impregnated surface in order to obtain a top coat,
wherein the impregnating agent is admixed with a preculture of and/or with spores of a fungus acting antagonistically against wood-destroying and/or wood-discolouring micro-organisms, or wherein at least the surface of the wood component to be coated is immersed, prior to application of the impregnating agent, in a liquid medium which is admixed with a preculture and/or with spores of a
fungus acting antagonistically against wood-destroying and/or wood-discolouring micro-organisms;
wherein the coating material used to obtain the top coat is free from a preculture or spores of the fungus acting antagonistically against wood-destroying and/or wood-discolouring micro-organisms;
wherein the
fungus acting antagonistically against wood-destroying and/or wood-discolouring micro-organisms is a fungus of the genus Trichoderma; and
wherein the impregnating agent comprises an in-can preservative
selected from the group consisting of isothiazolinones, Bronopol, or a pyrithione.

2. The method according to claim 1, **characterised in that** the fungus is a fungus of the genus Trichoderma with the scientific
designation Trichoderma harzianum, which was deposited with the DSMZ on 17 April 2024 (depositor reference: HFA 335) and assigned accession number DSM 34998, a fungus of the genus Trichoderma with the scientific designation Trichoderma virens, which was deposited with the DSMZ on 17 April 2024 (depositor reference: HFA 347) and assigned accession number DSM 35005, or a combination thereof.

3. The method according to any one of the preceding claims, **characterised in that**
the immersion time of the wood component in the liquid medium is between 30 seconds and 5 minutes, preferably between 1 and 3 minutes.

4. The method according to any one of the preceding claims, **characterised in that** the impregnating agent admixed with the preculture and/or with spores is prepared in an upstream process step by adding to an existing impregnating agent a liquid medium which is admixed with the preculture
and/or the spores.

5. The method according to any one of the preceding claims, **characterised in that** the impregnating agent comprises binders, in particular binders selected from the group consisting of alkyd resins, polyurethane resins, or acrylic resins.

6. The method according to any one of the preceding claims, **characterised in that** the impregnating agent comprises auxiliaries, in particular wetting and dispersing agents, cosolvents, defoamers, light stabilisers, hydrophobising agents, thickeners or fibres.

7. The method according to any one of the preceding claims, **characterised in that** the further coating material contains one or more pigments or fillers.

8. The method according to any one of the preceding claims, **characterised in that**
the method is a preventive method for protecting the wood component against fungal infestation and that the wood is free from damaging fungal infestation prior to application of the method.

9. A wood component having a coating on at least one of its surfaces and having a biological protection against infestation by wood-destroying and/or wood-discolouring fungi, manufactured by a method according to any one of the preceding claims.

10. Use of a wood component according to claim 9 as a construction material in window, door, façade, balcony and building construction, in particular for exterior applications.

11. A fungus of the genus Trichoderma with the scientific designation Trichoderma harzianum, which was deposited with the DSMZ on 17 April 2024 (depositor reference: HFA 335) and assigned accession number DSM 34998, or spores thereof.

12. A fungus of the genus Trichoderma with the scientific designation Trichoderma virens, which was deposited with the DSMZ on 17 April 2024 (depositor reference: HFA 347) and assigned accession number DSM 35005, or spores thereof.

## Revendications

1. Procédé de fabrication d'un élément de construction en bois revêtu sur au moins une surface, qui offre une protection biologique contre les attaques de moisissures lignivores
5 et/ou changeant la couleur du bois, comprenant l'imprégnation de l'élément de construction en bois par application d'un agent d'imprégnation sur la surface, ainsi que l'application ultérieure d'un autre agent de revêtement différent de l'agent d'imprégnation sur la surface imprégnée pour obtenir une couche de finition,
dans lequel l'agent d'imprégnation est mélangé à une préculture de spores et/ou avec des spores
de moisissures ayant une action antagoniste sur les microorganismes lignivores et/ou changeant la couleur du bois, ou du moins que la surface à revêtir de l'élément de construction en bois soit, avant l'application du produit d'imprégnation, immergée dans un milieu liquide, qui est imprégné d'une préculture et/ou de spores de moisissures ayant une action antagoniste sur les microorganismes
lignivores et/ou changeant la couleur du bois ;
dans lequel l'agent de revêtement est, pour l'obtention de la couche de finition, exempt d'une préculture ou de spores des moisissures ayant une action antagoniste sur les microorganismes lignivores et/ou changeant la couleur du bois ;
dans lequel les moisissures ayant une action antagoniste sur les microorganismes lignivores et/ou changeant la couleur du bois
sont des moisissures du genre Trichoderma ; et
dans lequel l'agent d'imprégnation comprend un agent de conservation en pot,
choisi dans le groupe des isothiazolinones/bronopol, ou une pyrithione.

2. Procédé selon l'exigence 1, **caractérisé par le fait que** les moisissures sont des moisissures du genre Trichoderma avec la dénomination scientifique
Trichoderma harzianum, qui ont été déposées auprès du centre de collecte allemand de microorganismes et de cultures cellulaires (DSMZ) le 17 avril 2024 (référence des déposants : HFA 335) et ont reçu le numéro d'entrée DSM 34998, des moisissures du genre Trichoderma avec la dénomination scientifique Trichoderma virens, qui ont été déposées auprès du DSMZ le 17 avril 2024 (référence des déposants : HFA 347) et ont reçu le numéro d'entrée DSM 35005, ou une combinaison de celles-ci.

3. Procédé selon l'une quelconque des exigences précédentes, **caractérisé par le fait que**
le temps d'immersion de l'élément de construction en bois dans le milieu liquide est compris entre 30 secondes et 5 minutes, de préférence entre 1 et 3 minutes.

4. Procédé selon l'une quelconque des exigences précédentes, **caractérisé par le fait que** l'agent d'imprégnation mélangé à la préculture et/ou aux spores est préparé lors d'une étape préalable du procédé, en ajoutant à un agent d'imprégnation existant un milieu liquide qui est mélangé à la préculture
et/ou aux spores.

5. Procédé selon l'une quelconque des exigences précédentes, **caractérisé par le fait que** l'agent d'imprégnation comprend des liants, notamment ceux appartenant au groupe des résines alkydes, polyuréthanes ou acryliques.

6. Procédé selon l'une quelconque des exigences précédentes, **caractérisé par le fait que** l'agent d'imprégnation comprend des adjuvants, en particulier des agents mouillants et dispersants, des co-solvants, des agents antimousses, des agents de protection contre la lumière, des agents hydrophobes, des épaississants ou des fibres.

7. Procédé selon l'une quelconque des exigences précédentes, **caractérisé par le fait que** l'autre agent de revêtement contient un ou plusieurs pigments ou matières de remplissage.

8. Procédé selon l'une quelconque des exigences précédentes, **caractérisé par le fait que** le procédé est un procédé préventif de protection de l'élément de construction en bois contre les attaques fongiques et que le bois est exempt d'attaques fongiques nuisibles avant l'application du procédé.

9. Élément de construction en bois avec un revêtement sur au moins une des surfaces et avec une
protection biologique contre les attaques de moisissures lignivores et/ou changeant la couleur du bois, obtenue par un procédé selon l'une quelconque des exigences précédentes.

10. Utilisation d'un élément de construction en bois selon l'exigence 9 comme matériau de construction dans la construction de fenêtres, de portes, de façades, de balcons et de bâtiments, en particulier à l'extérieur.

11. Moisissures du genre Trichoderma avec la dénomination scientifique Trichoderma harzianum, qui ont été déposées le 17 avril 2024 auprès du DSMZ (référence des déposants : HFA 335) et qui ont reçu le numéro d'entrée DSM 34998, ou spores de celles-ci.

12. Moisissures du genre Trichoderma avec la dénomination scientifique Trichoderma virens, qui ont été déposées le 17 avril 2024 auprès du DSMZ (référence des déposants : HFA 347) et qui ont reçu le numéro d'entrée DSM 35005, ou spores de celles-ci.
